# EUROPEAN PATENT SPECIFICATION

(11) **EP 3 561 828 B1**
(45) Date of publication and mention of the grant of the patent: **20.04.2022**
(21) Application number: 16924879.6
(22) Date of filing: 22.12.2016
(51) Int. Cl.: H01G 4/38, H01G 4/32, H01G 4/228, H01G 4/14

(54) **CYLINDRICAL MONOPHASIC CAPACITOR FOR HIGH VOLTAGES**
ZYLINDRISCHER EINPHASIGER KONDENSATOR FÜR HOHE SPANNUNGEN
CONDENSATEUR MONOPHASÉ CYLINDRIQUE POUR TENSIONS ÉLEVÉES

(43) Date of publication of application: 30.10.2019
(73) Proprietor: RTR Energia, S.L., 28320 Pinto Madrid (ES)
(72) Inventor: NUÑEZ- BARRANCO PATIÑO, Cesar, 28320 Pinto (Madrid) (ES)
(74) Representative: López Camba, Emilia
(86) International application number: PCT/ES2016/070927
(87) International publication number: WO 2018/115539

(56) References cited:
- EP-A1- 2 654 051
- WO-A1-01/52285
- ES-A1- 2 546 686
- FR-A1- 2 927 727
- GB-A- 436 128
- GB-A- 2 026 241
- US-A- 4 750 085
- US-A1- 2003 142 457
- US-A1- 2006 035 140
- US-A1- 2013 194 712
- US-A1- 2016 005 544

## Description

### OBJECT OF THE INVENTION

As the title of the invention suggests, the object of the present invention is a cylindrical monophasic capacitor that can withstand high voltages both in AC and in DC formed by four capacitors connected in series.

This invention is characterised in that the special configuration and design of the monophasic capacitor is formed by the association of four capacitors connected in series, presenting an embodiment in a single piece of cylindrical geometry and in that, as a result of being built from four capacitors connected in series, it enables a capacitor capable of working in a wide range of voltages and even high voltages to be achieved.

Therefore, the present invention is circumscribed within the scope of fixed capacitors, and particularly coiled capacitors, wherein the metal armatures are coiled over a sheet of dielectric material to form a compact cylinder that is usually placed in a capsule and finally waterproofed with a filler to protect it from moisture, oxidation and electrical effects, or by gas.

### BACKGROUND OF THE INVENTION

The capacitors with cylindrical geometry made in a single piece manufactured until now have a certain working voltage.

When there is a need to use said capacitors with a higher voltage, it is necessary to make the capacitors larger in size or use other more expensive and complex materials in their use for manufacturing so that they are able to withstand said higher voltage or through the use of capacitors in series.

It is known in the state of the art the following documents:
US2003142457 this document discloses a power capacitor for high voltage and comprises at least one capacitor element (2a-2d). The object is to achieve a capacitor with improved electrical properties and which allows simple manufacture. According to the invention, each capacitor (2a-2d) has a substantially circular-cylindrical shape. The inside of the container (1) has a corresponding shape so as to closely surround each capacitor element (2a-2d). In addition, each capacitor element (2a-2d) is oriented with the axial direction coinciding with the axial direction of the container.

US2013194712 this document discloses a wound film capacitors include a hollow core formed by a first non-conducting tubular section, and a first capacitor winding wrapped around the first non-conducting tubular section. Also included are a second non-conducting tubular section wrapped around the first capacitor winding, and a second capacitor winding wrapped around the second non-conducting tubular section.

Therefore, the object of the present invention is to develop a new concept of a capacitor with cylindrical geometry that is able to support a greater range of voltages without having to incur in greater sizes or other materials that would make the final product more expensive, to this end developing a cylindrical monophasic capacitor like the one described below and included in its essentiality in the first claim.

### DESCRIPTION OF THE INVENTION

The capacitor according to the invention is defined by the features of claim 1.

The capacitor for low voltage can work up to 1.0 kV in AC and up to 1.5 kV for DC. On the other hand, the capacitor for high voltage can work up to 6.6 kV in AC and up to 15 kV in DC.

The capacitor, as indicated above, is a monophasic capacitor with cylindrical geometry forming a cylinder, manufactured in a single piece and comprising four capacitors arranged in series, wherein a first and a second capacitor are joined in series forming an outer crown of the cylinder, while a third and a fourth capacitor are joined in series forming an inner crown of the cylinder, the outer and inner crowns being separated by means of an insulating material that protrudes from its upper edge while its lower edge is levelled with the lower edge of the corresponding capacitors. The capacitors of the outer ring and the capacitors of the inner ring are connected and serialised at the lower edge by conductive metallisation.

Each of the two capacitors of each crown, either the outer crown or the inner crown, is the result of arranging in a coil shape a set of double sheets, wherein one of the sheets has a first metallisation that presents a discontinuity along its central part with its ends joined to the connection points, while the second of the sheets has a second continuous metallisation without the ends touching the connection points where the ends of the first metallisation make contact. Thanks to the designed configuration, it is possible to obtain a monophasic capacitor in a cylindrical configuration in a single piece with the most noteworthy characteristics being the wide range of voltages achieved which quadruples the range of voltage achieved with an equal capacitor formed by a single capacitor. With the cylindrical monophasic capacitor object of the invention it is possible to conform sets of three-phase capacitors connected in delta and in star with the consequent advantages derived from the type of connection added to those of the monophasic capacitor object of the invention which presents a wide range of voltages.

### EXPLANATION OF THE FIGURES

To supplement the description being given below and with the aim of promoting a better understanding of the characteristics of the invention, this descriptive report is accompanied by a set of planes in whose figures, for illustrative and non-limiting purposes, the most significant details of the invention are represented.
Figure 1 shows a general and perspective representation of the capacitor object of the invention.
Figure 2 shows a schematic representation of the capacitors that form the capacitor object of the invention.
Figure 3 shows the section obtained by cutting the capacitor shown in Figure 1 in a vertical plane passing through its diameter.
Figures 4 and 5 show how the first and second capacitors are configured on one side, and the third and fourth capacitors on the other side.
Figure 6 shows a three-phase delta capacitor made from three monophasic capacitors such as the one that is the object of the invention
Figure 7 shows the connections that would have to be made between three monophasic capacitors such as the one that is the object of the invention in order to form a delta connection.
Figure 8 shows a three-phase star capacitor made from three monophasic capacitors such as the one that is the object of the invention
Figure 9 shows the connections that would have to be made between three monophasic capacitors such as the one that is the object of the invention in order to form a star connection.

### PREFERRED EMBODIMENT OF THE INVENTION

In view of the Figures, a preferred embodiment of the proposed invention is described below.

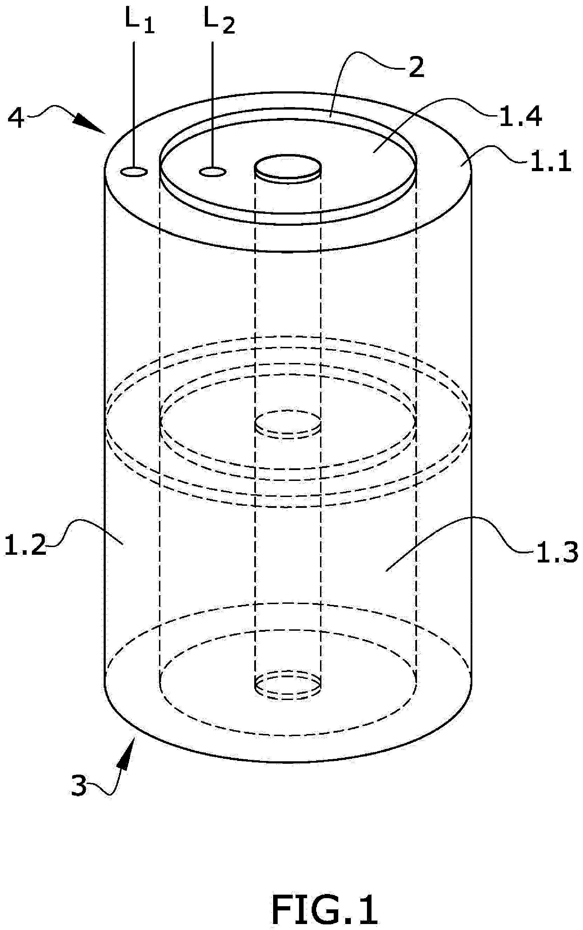

In Figure 1, it can be observed that the capacitor object of the invention has a cylindrical geometry in a single piece forming a cylinder comprising four monophasic capacitors, a first capacitor (1.1) arranged in the outer ring of the upper part of the cylinder, a second capacitor (1.2) arranged in the outer ring at the bottom of the cylinder, a third capacitor (1.3) arranged in the inner ring at the bottom of the cylinder and finally a fourth capacitor (1.4) arranged in the inner ring at the top of the cylinder, all of them connected in series.

The first (1.1) and second (1.2) capacitors are separated from the inner capacitors, i.e. the third (1.3) and fourth (1.4) capacitors, by a sheet of insulating material (2) that protrudes from one end. In the embodiment shown, it protrudes from the top, while the other end, at the bottom, it is levelled with the edge of the second (1.2) and third (1.3) capacitors.

The lower edge of the second capacitor (1.2) and of the third capacitor (1.3) is bonded equipotentially by a conductive metallisation (3), which in a possible embodiment may be made from metal powder.

The upper edge of the first capacitor (1.1) is covered by a metallisation (4), on which a contact point is provided for the fixing of a connection line (L1). The upper edge of the fourth capacitor (1.4) is covered by a metallisation (4) separated from that of the first capacitor thanks to the presence of the insulating material (2), and which has a fixing point for a second connection line (L2).

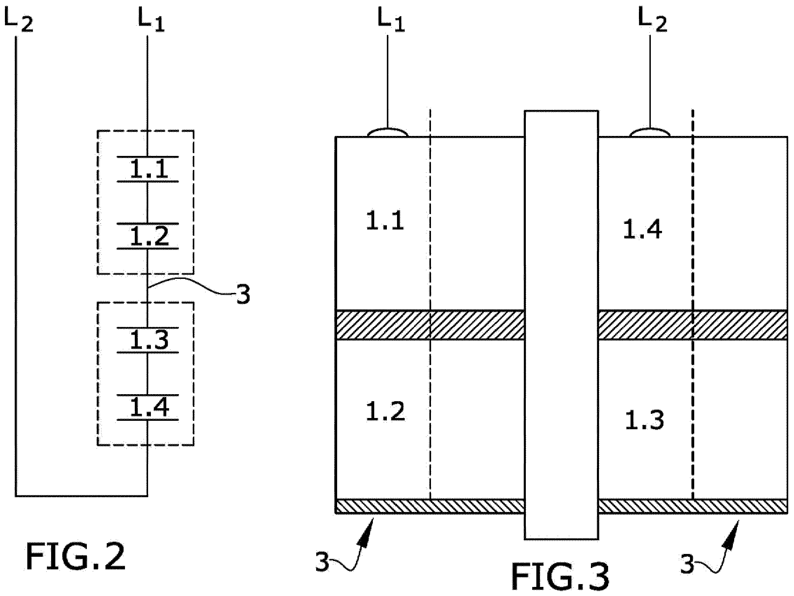

In Figure 2, which shows the schematic representation of how the four capacitors are joined, the series connection of the first capacitor (1.1) is observed, with the second capacitor (1.2) being grouped by a discontinuous line representing the outer ring of the cylinder. It also shows the connection of the second capacitor (1.2) with the third capacitor (1.3) made by conductive metallisation (3). Finally, the third capacitor (1.3) is connected with the fourth capacitor (1.4) to which the second connection line (L2) is connected.

In Figure 3, which shows the section obtained by cutting through a vertical plane passing through the diameter of the capacitor shown in Figure 1, it can be seen how the first capacitor (1.1) and the second capacitor (1.2) form an outer ring around the final cylinder, while the third capacitor (1.3) and the fourth capacitor (1.4) form the inner ring of the final cylinder. The connection of the second capacitor (1.2) to the third capacitor (1.3) is made by means of a conductive film (3).

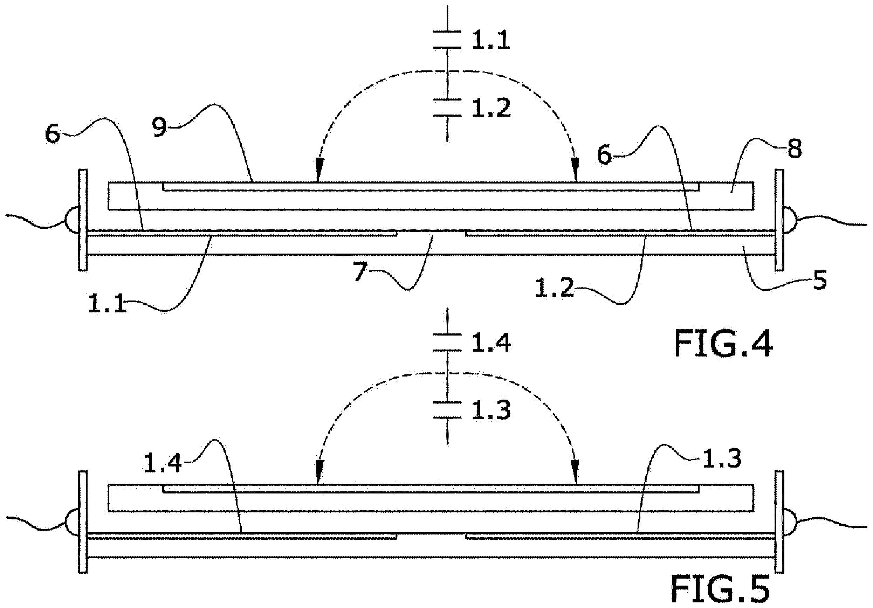

Each of the two capacitors of each crown, either the outer crown (first capacitor (1.1) and second capacitor (1.2)) or the inner crown (third capacitor (1.3) and fourth capacitor (1.4)) is the result of arranging in a coil shape a set of double sheets as shown in Figures 4 and 5.

Figure 4 shows that the coiled double sheet in the outer crown is formed by:
- a first sheet (5) of polypropylene film that acts as a support and on which there is a metallisation (6) that presents a separation in the central part (7), the ends being joined to contact points.
- a second sheet (8) of polypropylene film which has continuous metallisation (9) and does not come into contact with the end contact points of the first metallisation (6).

Said continuous metallisation (9) allows the union between the first capacitor (1.1) and the second capacitor (1.2).

The same considerations can be made in Figure 5, which represents a second set of double sheets configured in the same way, forming the third capacitor (1.3) and the fourth capacitor (1.4).

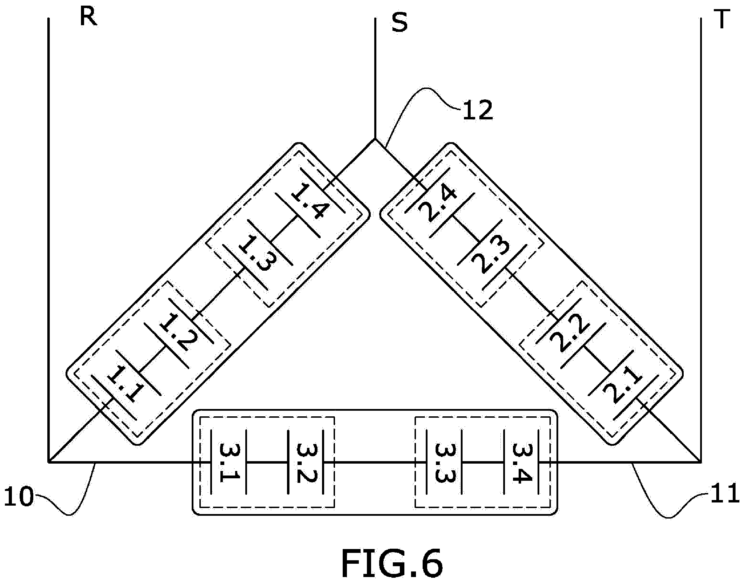

Figure 6 shows a three-phase delta-connected capacitor formed by three monophasic capacitors such as those object of the invention.

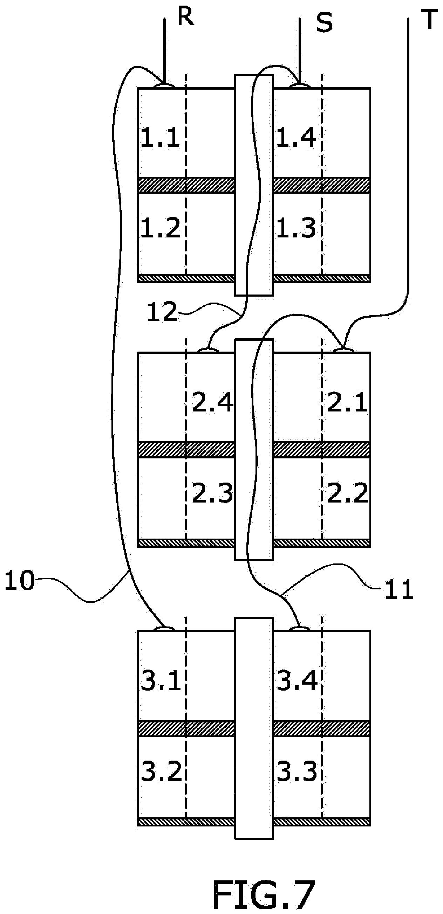

Figure 7 shows the connections that would have to be made to achieve a delta connection, comprising:
- a first connection (10) between the first capacitor (1.1) of the first monophasic capacitor and the first capacitor (3.1) of the third monophasic capacitor, from which, for example, the connection to phase R is taken.
- a second connection (11) between the first capacitor (2.1) of the second monophasic capacitor and the fourth capacitor (3.4) of the third monophasic capacitor from which the connection is taken, for example, to the T phase.
- and a third connection (12) between the fourth capacitor (2.4) of the second monophasic capacitor and the fourth capacitor (1.4) of the first capacitor from which, for example, the connection to phase S is taken.

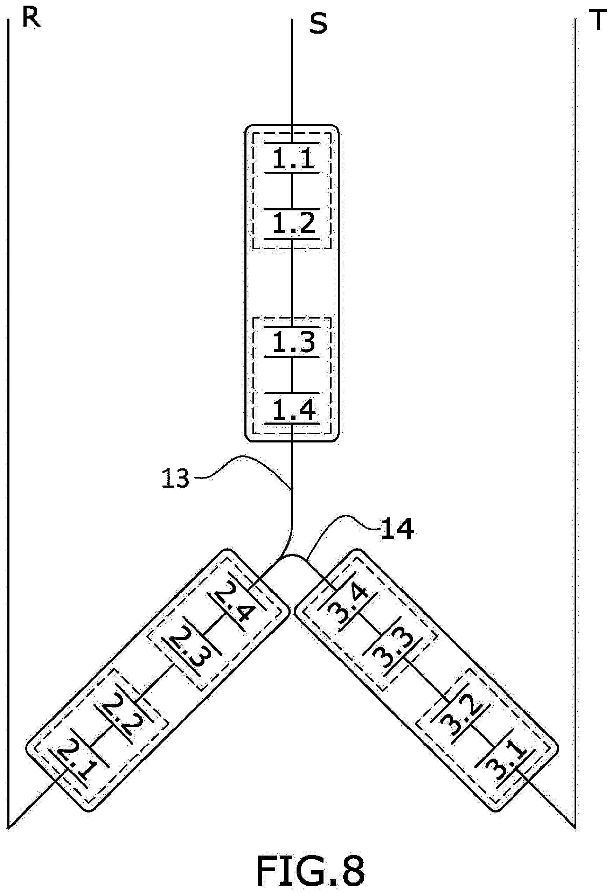

Figure 8 shows a three-phase star-connected capacitor made from three monophasic capacitors such as those object of the invention.

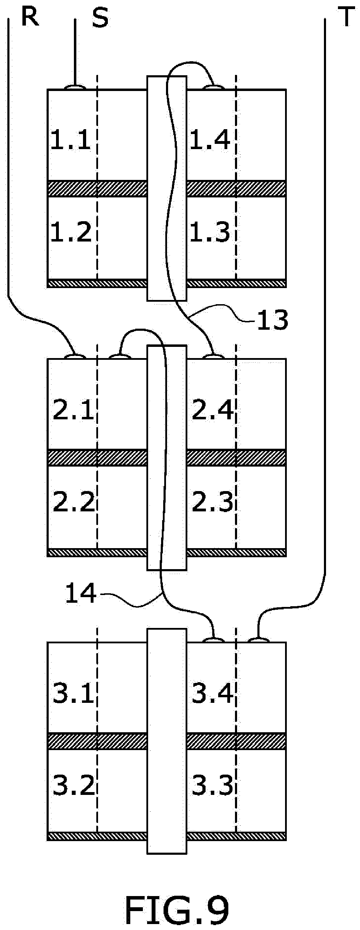

Figure 9 shows the connections that would have to be made to achieve a star connection, comprising:
- a first star connection (13) between the fourth capacitor (1.4) of the first monophasic capacitor and the fourth capacitor (2.4) of the second monophasic capacitor
- a second star connection (14) between the fourth capacitor (2.4) of the second monophasic capacitor and the fourth capacitor (3.4) of the third monophasic capacitor.

As shown, the R phase connection comes out of the first capacitor (2.1) of the second monophasic capacitor, the S phase comes out of the first capacitor (1.1) of the first monophasic capacitor, while the T phase comes out of the first capacitor (3.1) of the third monophasic capacitor.

## Claims

1. Cylindrical monophasic capacitor for high voltages which presents a single-piece cylindrical geometry forming a cylinder comprising four monophasic capacitors connected in series; a first capacitor (1.1) arranged in an outer ring at the top of the cylinder, a second capacitor (1.2) arranged in the outer ring at the bottom of the cylinder, a third capacitor (1.3) arranged in an inner ring at the bottom of the cylinder and finally a fourth capacitor (1.4) arranged in the inner ring of the upper part of the cylinder, all of them connected in series, wherein the first (1.1) and second (1.2) capacitors of the outer ring are separated from the capacitors of the inner ring, i.e. the third (1.3) and fourth (1.4) capacitors, by a sheet of insulating material (2) which protrudes at one end, while at the other end it is levelled with the edge of the second (1.2) and third (1.3) capacitors which are connected by conductive metallisation (3) that joins the lower edge of the second capacitor (1.2) and the third capacitor (1.3), said conductive metallisation (3) being made from metal powder, wherein the first capacitor (1.1) and the second capacitor (1.2) as well as the third capacitor (1.3) and fourth capacitor (1.4) are the result of arranging in a coil shape a set of double sheets formed by:
- a first sheet (5) of polypropylene film that acts as a support and on which it is arranged a metallisation (6) that presents a separation in the central part (7), the ends being joined to contact points.
- a second sheet (8) of polypropylene film which presents continuous metallisation (9) and does not come into contact with the end contact points of the first metallisation (6).

2. Capacitor according to claim 1 which presents a single-piece cylindrical geometry forming a cylinder comprising four monophasic capacitors connected in series; a first capacitor (1.1) arranged in an outer ring at the top of the cylinder, a second capacitor (1.2) arranged in the outer ring at the bottom of the cylinder, a third capacitor (1.3) arranged in an inner ring at the bottom of the cylinder and finally a fourth capacitor (1.4) arranged in the inner ring of the upper part of the cylinder, all of them connected in series, wherein the first (1.1) and second (1.2) capacitors of the outer ring are separated from the capacitors of the inner ring, i.e. the third (1.3) and fourth (1.4) capacitors, by a sheet of insulating material (2) which protrudes at one end, while at the other end it is levelled with the edge of the second (1.2) and third (1.3) capacitors which are connected by conductive metallisation (3) that joins the lower edge of the second capacitor (1.2) and the third capacitor (1.3), said conductive metallisation (3) being made from metal powder, being able to work in low voltage up to 1.0 kV in AC and 1.5 kV in DC, while if the capacitor is for high voltage it can work up to 6.6 kV in AC and 15 kV in DC.

## Patentansprüche

1. Zylindrischer einphasiger Kondensator für hohe Spannungen, der eine einstückige zylindrische Geometrie aufweist, die einen Zylinder bildet, der vier einphasige Kondensatoren umfasst, die in Reihe geschaltet sind; einen ersten Kondensator (1.1), der in einem äußeren Ring an der Oberseite des Zylinders angeordnet ist, einen zweiten Kondensator (1.2), der in dem äußeren Ring an der Unterseite des Zylinders angeordnet ist, einen dritten Kondensator (1.3), der in einem inneren Ring an der Unterseite des Zylinders angeordnet ist, und schließlich einen vierten Kondensator (1.4), der in dem inneren Ring des oberen Teils des Zylinders angeordnet ist, die alle in Reihe geschaltet sind, wobei der erste (1.1) und der zweite (1.2) Kondensator des Außenrings von den Kondensatoren des Innenrings, d. h. dem dritten (1.3) und vierten (1.4) Kondensator, durch eine Isolierstoffplatte (2) getrennt sind, die an einem Ende vorsteht, während sie am anderen Ende mit dem Rand des zweiten (1.2) und dritten (1.3) Kondensators nivelliert ist, die durch eine leitende Metallbeschichtung (3) verbunden sind, die den unteren Rand des zweiten Kondensators (1.2) und des dritten Kondensators (1.3) verbindet, wobei die leitende Metallbeschichtung (3) aus Metallpulver besteht, wobei der erste Kondensator (1.1) und der zweite Kondensator (1.2) sowie der dritte Kondensator (1.3) und der vierte Kondensator (1.4) das Ergebnis des Anordnens in einer Spulenform eines Satzes von Doppelbahnen sind, die gebildet sind durch:
- eine erste Bahn (5) aus Polypropylenfolie, die als Träger wirkt und auf der eine Metallbeschichtung (6) angeordnet ist, die im Mittelteil (7) eine Trennung aufweist, wobei die Enden mit Kontaktstellen verbunden sind.
- eine zweite Bahn (8) aus Polypropylenfolie, die eine durchgehende Metallbeschichtung (9) aufweist und nicht mit den Endkontaktstellen der ersten Metallbeschichtung (6) in Kontakt kommt.

2. Kondensator nach Anspruch 1, der eine einstückige zylindrische Geometrie aufweist, die einen Zylinder bildet, der vier einphasige Kondensatoren umfasst, die in Reihe geschaltet sind; einen ersten Kondensator (1.1), der in einem äußeren Ring an der Oberseite des Zylinders angeordnet ist, einen zweiten Kondensator (1.2), der in dem äußeren Ring an der Unterseite des Zylinders angeordnet ist, einen dritten Kondensator (1.3), der in einem inneren Ring an der Unterseite des Zylinders angeordnet ist, und schließlich einen vierten Kondensator (1.4), der in dem inneren Ring des oberen Teils des Zylinders angeordnet ist, die alle in Reihe geschaltet sind, wobei der erste (1.1) und der zweite (1.2) Kondensator des Außenrings von den Kondensatoren des Innenrings, d. h. dem dritten (1.3) und vierten (1.4) Kondensator, durch eine Isolierstoffplatte (2) getrennt sind, die an einem Ende vorsteht, während sie am anderen Ende mit dem Rand des zweiten (1.2) und dritten (1.3) Kondensators nivelliert ist, die durch eine leitende Metallbeschichtung (3) verbunden sind, die den unteren Rand des zweiten Kondensators (1.2) und des dritten Kondensators (1.3) verbindet, wobei die leitende Metallbeschichtung (3) aus Metallpulver besteht und in der Lage ist, bei Niederspannung mit bis zu 1,0 kV Wechselstrom und 1,5 kV Gleichstrom zu arbeiten, während, wenn der Kondensator für Hochspannung eingesetzt wird, er mit bis zu 6,6 kV Wechselstrom und 15 kV Gleichstrom arbeiten kann.

## Revendications

1. Condensateur monophasé cylindrique pour tensions élevées qui présente une géométrie cylindrique monobloc formant un cylindre comprenant quatre condensateurs monophasés connectés en série ; un premier condensateur (1.1) disposé dans un anneau extérieur au sommet du cylindre, un deuxième condensateur (1.2) disposé dans l'anneau extérieur au fond du cylindre, un troisième condensateur (1.3) disposé dans un anneau intérieur au fond du cylindre et enfin un quatrième condensateur (1.4) disposé dans l'anneau intérieur de la partie supérieure du cylindre, tous les condensateurs étant connectés en série, dans lequel les premier (1.1) et deuxième (1.2) condensateurs de l'anneau extérieur sont séparés des condensateurs de l'anneau intérieur, c'est-à-dire des troisième (1.3) et quatrième (1.4) condensateurs, par une feuille de matériau isolant (2) qui fait saillie à une extrémité, tandis qu'à l'autre extrémité, elle est mise à niveau avec le bord des deuxième (1.2) et troisième (1.3) condensateurs qui sont connectés par une métallisation conductrice (3) qui rejoint le bord inférieur du deuxième condensateur (1.2) et du troisième condensateur (1.3), ladite métallisation conductrice (3) étant faite de poudre métallique, dans lequel le premier condensateur (1.1) et le deuxième condensateur (1.2) ainsi que le troisième condensateur (1.3) et le quatrième condensateur (1.4) sont le résultat de la disposition en forme de bobine d'un ensemble de doubles feuilles formées par :
- une première feuille (5) de film de polypropylène qui sert de support et sur laquelle est disposée une métallisation (6) qui présente une séparation dans la partie centrale (7), les extrémités étant jointes à des points de contact.
- une seconde feuille (8) de film de polypropylène qui présente une métallisation continue (9) et n'entre pas en contact avec les points de contact d'extrémité de la première métallisation (6).

2. Condensateur selon la revendication 1, qui présente une géométrie cylindrique monobloc formant un cylindre comprenant quatre condensateurs monophasés connectés en série ; un premier condensateur (1.1) disposé dans un anneau extérieur au sommet du cylindre, un deuxième condensateur (1.2) disposé dans l'anneau extérieur au fond du cylindre, un troisième condensateur (1.3) disposé dans un anneau intérieur au fond du cylindre et enfin un quatrième condensateur (1.4) disposé dans l'anneau intérieur de la partie supérieure du cylindre, tous connectés en série, dans lequel les premier (1.1) et deuxième (1.2) condensateurs de l'anneau extérieur sont séparées des condensateurs de l'anneau intérieur, c'est-à-dire des troisième (1.3) et quatrième (1.4) condensateurs, par une feuille de matériau isolant (2) qui fait saillie à une extrémité, tandis qu'à l'autre extrémité, elle est mise à niveau avec le bord des deuxième (1.2) et troisième (1.3) condensateurs qui sont connectés par une métallisation conductrice (3) qui rejoint le bord inférieur du deuxième condensateur (1.2) et du troisième condensateur (1.3), ladite métallisation conductrice (3) étant faite de poudre métallique, pouvant fonctionner à basse tension jusqu'à 1,0 kV en courant alternatif et 1,5 kV en courant continu, tandis que si le condensateur est conçu pour une tension élevée il peut fonctionner jusqu'à 6,6 kV en courant alternatif et 15 kV en courant continu.
